Europäisches Patentamt

European Patent Office

Office européen des brevets

(19)

(11) Publication number: **0 317 712**
**A2**

(12) # EUROPEAN PATENT APPLICATION

(21) Application number: **88113077.7**

(51) Int. Cl.4: **G02B 5/18**

(22) Date of filing: **11.08.88**

The title of the invention has been amended (Guidelines for Examination in the EPO, A-III, 7.3).

(30) Priority: **05.10.87 CN 87106567**

(43) Date of publication of application:
**31.05.89 Bulletin 89/22**

(84) Designated Contracting States:
**BE DE FR GB**

(71) Applicant: **Shang, Huichun**
**Room No. 330,Gate No. 2 Building No. 6,ZaoLinXiLi**
**XuanWu District Bejing(CN)**

(72) Inventor: **Shang, Huichun**
**Room No. 330,Gate No. 2 Building No. 6,ZaoLinXiLi**
**XuanWu District Bejing(CN)**

(74) Representative: **Liesegang, Roland, Dr.-Ing. et al**
**FORRESTER & BOEHMERT**
**Widenmayerstrasse 4**
**D-8000 München 22(DE)**

(54) **Method of manufacturing light-dispersive materials and products on an industrial scale.**

(57) A method for producing rainbow-producing materials and articles in industrial-scale comprising to plasticize a glass or a plastic material then to roll the plasticized glass or plastic by a pair of rollers with grating grooves on their surfaces or to pour the plasticized glass or plastic into a mold with grating grooves on its inner surface to be formed by blowing or extruding, thus a rainbow-producing material or article with grating grooves on their surfaces can be achieved.

Fig. 1

EP 0 317 712 A2

## Methods for Manufacturing Rainbow-producing materials and Rainbow-producing products in industrial-scale

### Field of the invention

The invention relates to methods for manufacturing rainbow-producing materials and rainbow-producing products in industrial-scale.

### Background of the invention

The rainbow-producing materials disclosed in the Chinese utility models application No. 85200328 and No. 87202872 as well as the rainbow lamp device disclosed in No. 85203803, which are applied by the inventor of the invention are all now manufactured in small, semi-mechanical or manual scales. Thus, there are disadvantages such as low productivity, high cost, labour expensive and small sizes in products.

The methods according to the invention may overcome the disadvantages in proir art such that the aforesaid rainbow-producing materials and products can be manufactured in industrial-scale.

### The object and summary of the invention

An object of the invention is to provide a method for manufacturing the rainbow-producing materials and products in industrial-scale.

The method according to the invention can be employed in the present production lines of plate glass and glass articles as well as plastic plate and plastic articles. Through a suitable modification on the manufacturing equipment related to the aforesaid production lines, it is able to manufacture the respective rainbow producing materials and products.

For the time being, the mechanical production of plate glass consists of methods of vertical drawing, rolling, horizontal sheet process and float-process. The steps of these processes may substantially be divided into row materials choosing, loading, melting, forming and annealing. Thus, a feature of the method according to the invention is characterized in that during a glass stream issuing from a furnace while without solidifying to be formed into a certain shape, by then the temperature of the glass bing in a range from 1000°C to 1080°C, we arrange a pair of rollers having engraved grooves in grating form on their surfaces to roll the glass under a plastic state and may obtain a rainbow-producing glass whose surface holds grating grooves after it having been solidified. Of course, it is permissible to engrave grooves on only one of the pair of rollers. The density of the grooves on the surface of the roller is from 50 lines/mm to 1500 lines/mm. The grooves on the surface of roller can be formed by engraving directly or by inserting some small grating plates into the roller. The surfaces of rollers should be chronium or copper--plated.

The method for manufacturing rainbow-producing materials by making use of a plastic plate is similar to aforesaid method. First, heat a plastic plate to a plastized state, then, roll the plasticized plastic plate with the rollers having engraved grooves on their surface under temperature from 170°C to 180°C, thus the rolled plastic plate after cooling becomes a rainbow-producing plastic plate with grooves.

In production lines to mold the rainbow-producing glass articles and plastic articles, according to the method of the invention, the grooves are engraved on an inner surface of a mold with density of grooves about 50 lines/mm to 1500 lines/mm. When a glass stream poured into the mold is subject to be formed by mold pressing or blowing or a heating plastic material is injected into an injection mold to be formed by extruding or blowing, the glass or plastics may form articles with grooves on their outer surfaces. Thus, the articles can generate colour patterns when they are positioned under a non-monochoromatic light source.

By referring the following accompanying drawings and their description, man skilled in the art will understand the invention more clearly.

The preferred embodiment of the invention.

Fig. 1 is a flow chart showing to manufacture rainbow--producing material according to a method of the invention in a production line of figured glass.

Fig. 2 is a front view showing an embodiment of a roller used in a method of the invention.

Fig. 3 is a sectional view showing an embodiment of the mold used to manufacture a rainbow-producing article according to a method of the invention in a production line for molding a glass or a plastic article.

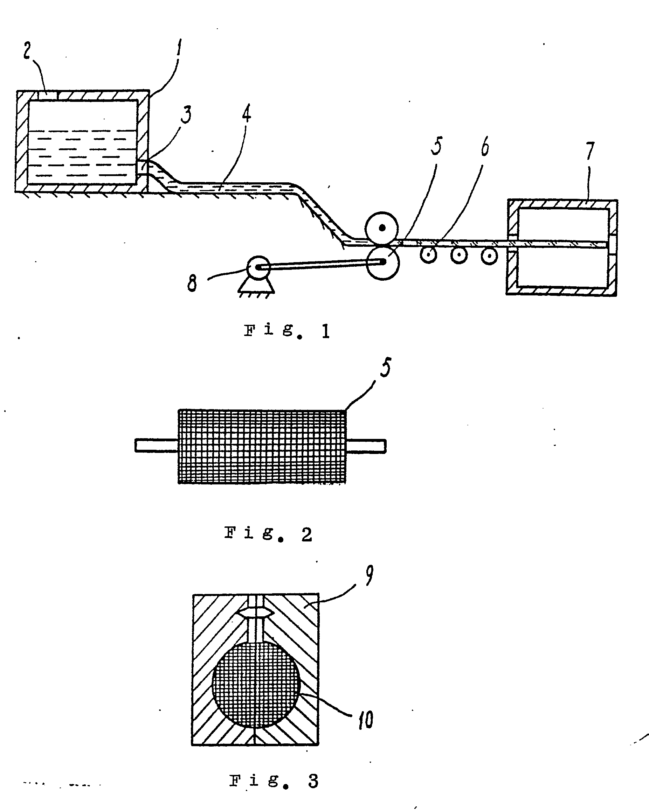

As shown in fig. 1, the raw material is fed into a furnace 1 from inlet 2 of the furnace, then the method and refined glass is poured out from an outlet 3 of the furnace. Subsequently, the glass flows to a pair of rollers 5 having grooves on their surfaces along a horizontal passage 4 and the pair of rollers 5 roll the plasticized glass having a temperature about 1000°C, thus, grating grooves is formed on the surface of the rolled glass. One roller of the pair of rollers 5 is a driving-roller which is driven to rotate by a motor 8.

Fig. 2 shows a roller 5 having grating grooves on its surface used in the method, wherein the grooves are shown in an orthogonal arrangement however it can take any other suitable arrangement. The density of grooves is from about 50 lines/mm to 1500 lines/mm and the lines can be engraved directly on the outer surface of the chronium or coppoer-plated roller or they can be formed on the roller through inserting some small grating plates.

Fig. 3 schematically shows a mold used to manufacture a rainbow-producing glass article, where 9 denotes a split mold and 10 denotes the grating grooves on the inner surface of the mold with a grooves density similar to that said above and the surface can be formed through inserting small grating plates on the mold. Once a melted glass is poured into the mold 9, after molding or blowing, the grating grooves will be presented on the outer surface of the article involved.

The method shown in fig. 1 and fig. 3 can also be employed to manufacture rainbow-producing plastic plates or articles except that the working temperature should be changed suitably, which however is well known to man skilled in the art.

During the process for manufacturing a rainbow-producing plate, plastic plate, a shaped plastic plate is heated to its plasticized state then is rolled by the pair of rollers 5 having grating grooves on their surface and the grating grooves will be appeared on the plate after it is cooled. In this process, there in no the necessity of the steps to melt row mateirals and to anneal the plate.

during the process for manufacturing a rainbow-producing plastic article, the heated plastic material is injected into the mold 9 by an injector then is formed through blowing or extruding.

The grating grooves on outer surface of the roller and inner surface of the mold used in the method according to the invention are achieved through engraving or replicating.

The method of the invention is not limited in the aforesaid embodiments and may be widely used in a variety of production lines related to inorganic or organic glass and plastics as well as their different articles.

## Claims

1. A method for manufacturing a rainbow-producing material in industrial scale comprising to feed raw materials of a glass in a furnace to melt and refine and the refined glass flowing out from an outlet of the furnace then becoming gradually as a plasticized state characterized in that the glass under the plasticized state is rolled by a pair of rollers with grating grooves on their surface and the rolled glass having grating grooves on its surface is transported into a lehr for annealing.

2. A method for manufacturing a rainbow-producing material in industrial-scale comprising to heat a plastic plate to its plasticized state characterized in that the plasticized plastic plate is rolled by a pair of rollers with grating grooves on their surfaces then the rolled plastic plate having the grating grooves on its surface is cooled.

3. A method for producing a rainbow-producing material in industrial-scale comprising to feed raw materials of a glass in a furnace to melt and refine characterized in that the melted and refined glass is poured into a mold with grating grooves on its inner surface and then the refined glass is formed by blowing.

4. A method for producing a rainbow-producing material in industrial-scale comprising to heat the raw material of plastics characterized in that the heated plastics is injected in a mold with grating grooves on its inner surface to be formed by blowing or extruding.

5. The method according to any one of claims 1 to 4 wherein the density of the said grating grooves is from 50 lines/mm to 1500 lines/mm.

Fig. 1

Fig. 2

Fig. 3